# EUROPEAN PATENT APPLICATION

(11) **EP 1 067 806 A1**
(43) Date of publication of application: **10.01.2001**
(21) Application number: 99401744.0
(22) Date of filing: 09.07.1999
(51) Int. Cl.: H04N 17/04, G06F 11/00, G06F 11/26

(54) **Apparatus for and method of testing applications**

(71) Applicant: CANAL+ Société Anonyme, 75711 Paris Cedex 15 (FR)
(72) Inventor: Liao, Hongtao, 78180 Montigny-Btx (FR); Masson, Bruno Canal+ Technologies S A, 75516 Paris Cédex 15 (FR); Beuque, Jean-Bernard Gerard Maurice, 92270 Bois-Colombes (FR)
(74) Representative: Cozens, Paul Dennis

(57) **Abstract**

Apparatus for testing an application for a receiver/decoder, for example, for a television system, is disclosed, the apparatus comprising means for simulating a function of the receiver/decoder. Apparatus for editing and testing an application, and an associated workstation are also disclosed. Also disclosed is a method of testing applications, in which a function of a receiver/decoder is simulated.

## Description

The invention relates to apparatus for and method of testing applications. It has particular application in authoring tools for use in creating, developing and testing applications for interactive television systems.

Digital television systems transmit television channels to the viewer in digital, rather than analogue, form. The digital channels are encoded into a digital data stream at the transmitter end, and are decoded at the receiver end using a digital decoder, which may be either in a digital set-top box (DSTB) or in an integrated digital television. To allow interactivity, an uplink may be provided, either via the same medium that delivers the television channels, or else via a different medium such as a telephone link. As used herein, the term "digital television system" includes for example any satellite, terrestrial, cable and other system.

Digital decoders typically contain a processor on which programs known as applications may be run. Examples of applications include programme guides, tele-shopping, quizzes, home-banking and tele-voting. Such applications typically display a menu on the television screen from which the user may select a particular option. The result of the selection can be transmitted via the uplink to allow the appropriate action to be taken.

Applications may interact with various pieces of hardware, such as smart card readers, graphics cards, infrared remote control circuits, keyboards, input/output ports or modems, and they may also receive data from the medium in which the television signals are transmitted. In order to provide an interface between applications and the hardware, software modules known as devices are provided. Such devices consist of the logical resources necessary for management of external events and physical interfaces. Within the context of the present invention the word "device" is used to indicate such a software module.

With the rapidly increasing number of services that are being provided to subscribers, there is a demand for authoring tools which can allow applications to be designed, created, debugged and tested. An example of such an authoring tool is *Media*highway Application Workshop, supplied by *CANAL*+.

Known authoring tools typically allow applications to be developed on a workstation, such as a Windows NT or UNIX workstation. When the application is ready for testing, it is downloaded in its entirety to a digital decoder such as a DSTB. The performance of the application with the digital decoder can then be tested. This testing procedure can be cumbersome.

According to the invention, there is provided apparatus for testing an application for a receiver/decoder, comprising means for simulating a function of the receiver/decoder.

The invention provides the advantage that a receiver/decoder and associated hardware do not have to be provided to test the application. The invention also provides the advantage that the application developer may see the results of any changes in the application without downloading the application to a receiver/decoder.

The term "receiver/decoder" used herein may connote a receiver for receiving either encoded or non-encoded signals, for example, television and/or radio signals, which may be broadcast or transmitted by some other means. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser, a video recorder, or a television.

The means for simulating a function of the receiver/decoder may be, for example, a processor which is programmed to simulate the function of the receiver/decoder.

The apparatus may be adapted to run the application, which may enable the application developer to see how the application would perform if it were run on a real receiver/decoder. Preferably, the apparatus is adapted to run the application in a first process and to simulate a function of the receiver/decoder in a second process. This may allow asynchronous events occurring in a real receiver/decoder to be simulated in the second process while the application is being run in the first process. The first and second processes may be independent of each other, and may be run on the same processor. The apparatus may additionally comprise a partitioned memory for enabling the passing of data between the first process and the second process.

A function of the receiver/decoder may be at least partly simulated in software, so that hardware in the receiver/decoder which produces that function does not have to be provided. However, where the apparatus has hardware available to it which corresponds to hardware on the receiver/decoder, that hardware may be used to simulate a function of the receiver/decoder, and thus a function of the receiver/decoder may be simulated using hardware which corresponds to hardware in a receiver/decoder.

The apparatus may comprise storage means (such as a store, for example, computer memory or a computer readable medium such as a hard disk) for storing a file containing data which represents data produced by a piece of hardware in a receiver/decoder. This may allow the function of that piece of hardware to be simulated. The apparatus may also be adapted to produce an output, for display on a screen, which simulates an output of a receiver/decoder. This may allow the application developer to see on the screen the output of the application as it would appear, for example, on a television screen. The apparatus may further be adapted to receive as an input data representing data that would be received by a receiver/decoder, for example, from a piece of hardware. Such a piece of hardware may be represented in the window of the screen. For example, in the case of a remote control unit, a representation of a remote control unit may be displayed in a window on the screen, and the user may interact with the representation of the remote control unit in order to test the application. Thus the apparatus may be adapted to produce an output for display on a screen which represents a piece of hardware with which a receiver/decoder may interact.

The invention also provides apparatus for editing and testing an application, comprising an editor for editing the application and apparatus for testing the application as described above. It will be understood that the term "editor" includes a program or other tool for designing, creating or altering applications. In this way, an editor for editing an application and a simulator for simulating the behaviour of a receiver/decoder in order to test the application may be provided on the same apparatus, such as a workstation.

The editor may be adapted to produce an output for display on a screen, with the means for simulating a function of the receiver/decoder being adapted to produce an output for display on the same screen. This may allow the application developer to see the output of the application on the same screen as is used for editing the application. The processor may comprise a processor for running both the editor and the means for simulating a function of the receiver/ decoder. The means for simulating a function of a receiver/decoder may be adapted to run an application which has been edited by the editor.

The apparatus in any of the foregoing forms may be such that the function of the receiver/decoder is at least one of receiving and processing input data, for example from a remote control, a keyboard or a communication device such as a modem, decoding video data, producing a video output, tuning into a broadcast signal, communicating with a smartcard, and preferably a function of at least one of the following devices: REMOTE CONTROL, SERIAL, PARALLEL, BUS 1394, MODEM, NETWORK STACK, CLOCK, KEYBOARD, POINTER, GRAPHIC, PICTURE, AUDIO, VIDEO, SERVICE, DISPLAY, SCTV, SCVCR, SCAUX, POWER, BACKUP, MLOAD, TUNER, and SMARTCARD.

The invention also provides a workstation comprising an editor for editing applications, a simulator for simulating a function of a receiver/decoder, and a display for displaying an output of the editor and an output of the simulator.

The simulator of the workstation may be adapted to run an application which has been edited by the editor. The output of the simulator may be displayed in a window of the display. An input device for inputting data to the application may be simulated in a window of the display.

In a method aspect of the present invention, there is provided a method of testing an application for a receiver/decoder, comprising simulating a function of the receiver/decoder.

The method may further comprise the step of running the application. The application may be run in first process and the function of a receiver/decoder may be simulated in a second process. The first and second processes may be independent of each other. The first and second processes may also be run on the same processor. A partitioned memory may be used for passing data between the first process and the second process.

In the method, a function of the receiver/decoder may be at least partly simulated in software. A function of the receiver/decoder may be simulated using hardware which corresponds to hardware in a receiver/decoder.

The foregoing method may also comprise a step of using a simulation file to represent data produced by a piece of hardware in a receiver/decoder.

The foregoing method may also comprise a step of producing an output, for display on a screen, which simulates an output of a receiver/decoder.

The foregoing method may also comprise a step of receiving as an input data representing data that would be received by a receiver/decoder.

In the method aspect of the present invention, there may be provided a method of editing and testing applications comprising editing applications and further comprising any of the above methods of testing applications.

The editing method may produce an output for display on a screen, and the testing method may produce an output for display on the same screen. The editing method and the testing method may be run on the same processor. The testing method may test an application which has been edited by the editing method.

The invention also provides a computer readable medium having stored thereon a program for carrying out any of the above described methods, and a computer program product comprising a program for carrying out any of the above described methods.

The invention also provides a method and apparatus substantially as described with reference to and as illustrated in the accompanying drawings.

Features of one aspect may be applied to other aspects; similarly method features may be applied to apparatus aspects and *vice versa.*

Preferred features of the present invention will now be described, purely by way of example, with reference to the accompanying drawings, in which:-
Figure 1 shows the architecture of a typical digital television system;
Figure 2 shows the architecture of an interactive system of the digital television system of Figure 1;
Figure 3 is a schematic diagram of the structure of a receiver/decoder of the system of Figure 1;
Figure 4 is a functional block diagram of the layered architecture of the receiver/decoder;
Figure 5 shows a workstation for running an application authoring tool;
Figure 6 shows the main elements of an authoring tool;
Figure 7 shows the main modules of a simulator according to an embodiment of the present invention;
Figures 8 and 9 are schematic representations of the operation of a simulator;
Figure 10 shows an example of how an image is produced for output by a receiver/decoder; and
Figures 11 and 12 show examples of applications being run on a simulated receiver/decoder.

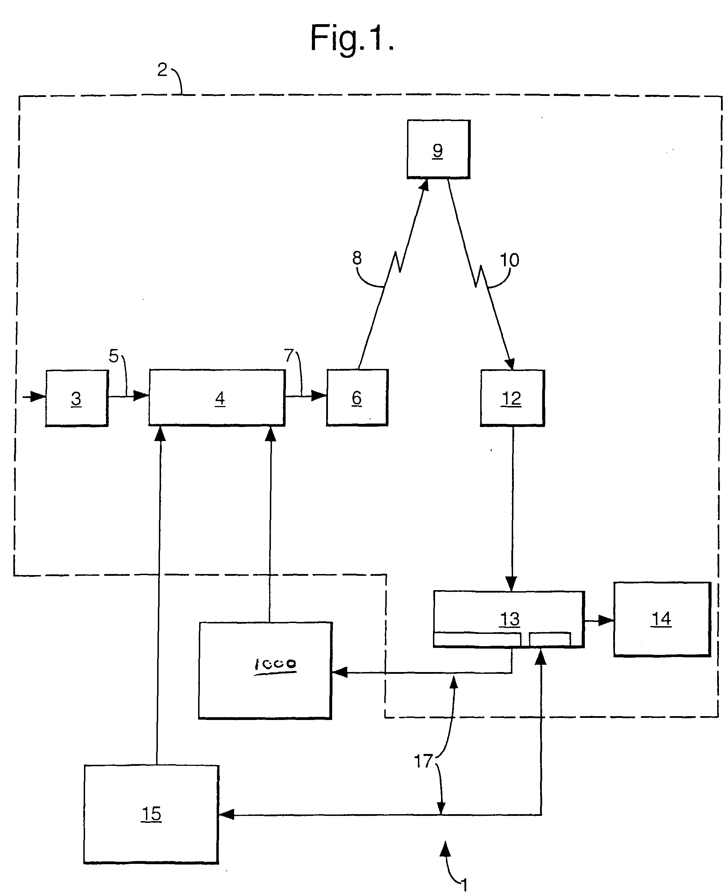

An overview of a digital television system 1 is shown in Figure 1. The invention includes a mostly conventional digital television system 2 that uses the known MPEG-2 compression system to transmit compressed digital signals. In more detail, MPEG-2 compressor 3 in a broadcast centre receives a digital signal stream (typically a stream of video signals). The compressor 3 is connected to a multiplexer and scrambler 4 by linkage 5.

The multiplexer 4 receives a plurality of further input signals, assembles the transport stream and transmits compressed digital signals to a transmitter 6 of the broadcast centre via linkage 7, which can of course take a wide variety of forms including telecommunications links. The transmitter 6 transmits electromagnetic signals via uplink 8 towards a satellite transponder 9, where they are electronically processed and broadcast via notional downlink 10 to earth receiver 12, conventionally in the form of a dish owned or rented by the end user. Other transport channels for transmission of the data are of course possible, such as terrestrial broadcast, cable transmission, combined satellite/cable links, telephone networks etc.

The signals received by receiver 12 are transmitted to an integrated receiver/decoder 13 owned or rented by the end user and connected to the end user's television set 14. The receiver/decoder 13 decodes the compressed MPEG-2 signal into a television signal for the television set 14. Although a separate receiver/decoder is shown in Figure 1, the receiver/decoder may also be part of an integrated digital television. As used herein, the term "receiver/decoder" includes a separate receiver/decoder, such as a set-top box, and a television having a receiver/decoder integrated therewith.

In a multichannel system, the multiplexer 4 handles audio and video information received from a number of parallel sources and interacts with the transmitter 6 to broadcast the information along a corresponding number of channels. In addition to audiovisual information, messages or applications or any other sort of digital data may be introduced in some or all of these channels interlaced with the transmitted digital audio and video information.

A conditional access system 15 is connected to the multiplexer 4 and the receiver/decoder 13, and is located partly in the broadcast centre and partly in the decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 13. Using the decoder 13 and smartcard, the end user may purchase commercial offers in either a subscription mode or a pay-per-view mode.

As mentioned above, programmes transmitted by the system are scrambled at the multiplexer 4, the conditions and encryption keys applied to a given transmission being determined by the access control system 15. Transmission of scrambled data in this way is well known in the field of pay TV systems. Typically, scrambled data is transmitted together with a control word for descrambling of the data, the control word itself being encrypted by a so-called exploitation key and transmitted in encrypted form.

The scrambled data and encrypted control word are then received by the decoder 13 having access to an equivalent to the exploitation key stored on a smart card inserted in the decoder to decrypt the encrypted control word and thereafter descramble the transmitted data. A paid-up subscriber will receive, for example, in a broadcast monthly EMM (Entitlement Management Message) the exploitation key necessary to decrypt the encrypted control word so as to permit viewing of the transmission.

An interactive system 16, also connected to the multiplexer 4 and the receiver/decoder 13 and again located partly in the broadcast centre and partly in the decoder, enables the end user to interact with various applications via a modemed back channel 17. The modemed back channel may also be used for communications used in the conditional access system 15. An interactive system may be used, for example, to enable the viewer to communicate immediately with the transmission centre to demand authorisation to watch a particular event, to download an application etc.

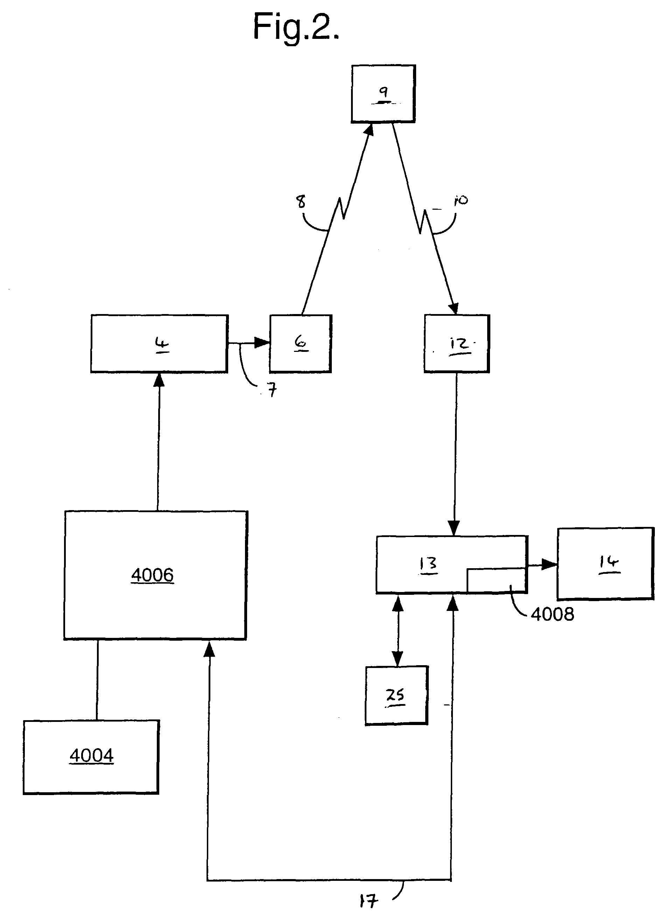

Figure 2 shows the general architecture of the interactive television system 16 of the digital television system 1 of the present invention.

For example, the interacting system 16 allows an end user to buy items from on-screen catalogues, consult local news and weather maps on demand and play games through their television set.

The interactive system 4000 comprises in overview four main elements:-
- an authoring tool 4004 at the broadcast centre or elsewhere for enabling a broadcast supplier to create, develop, debug and test applications;
- an application and data server 4006, at the broadcast centre, connected to the authoring tool 4004 for enabling a broadcast supplier to prepare, authenticate and format applications and data for delivery to the multiplexer and scrambler 4 for insertion into the MPEG-2 transport stream (typically the private section thereof) to be broadcast to the end user;
- a virtual machine including a run time engine (RTE) 4008, which is an executable code installed in the receiver/decoder 13 owned or rented by the end user for enabling an end user to receive, authenticate, decompress, and load applications into the working memory of the decoder 13 for execution. The engine 4008 also runs resident, general-purpose applications. The engine 4008 is independent of the hardware and operating system; and
- a modemed back channel 17 between the receiver/decoder 13 and the application and data server 4006 to enable signals instructing the server 4006 to insert data and applications into the MPEG-2 transport stream at the request of the end user.

The interactive television system operates using "applications" which control the functions of the receiver/decoder and various devices contained therein. Applications are represented in the engine 4008 as "resource files". A "module" is a set of resource files and data. A "memory volume" of the receiver/decoder is a storage space for modules. Modules may be downloaded into the receiver/decoder 13 from the MPEG-2 transport stream.

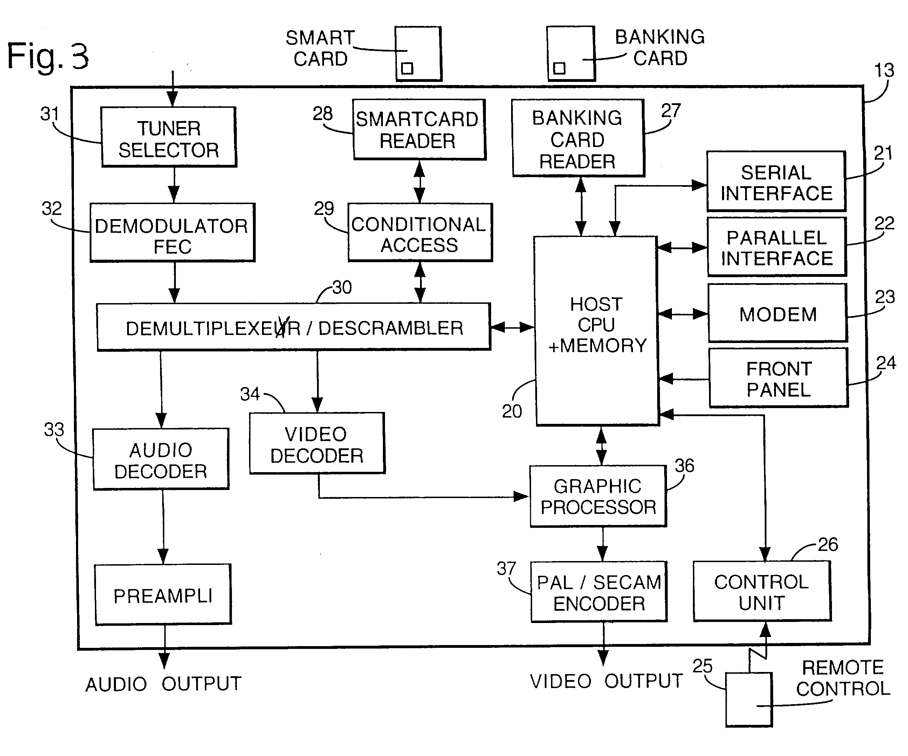

Referring to Figure 3, the elements of the receiver/decoder 13 or set-top box will now be described. The elements shown in this figure will be described in terms of functional blocks.

The decoder 13 comprises a central processor 20 including associated memory elements and adapted to receive input data from a serial interface 21, a parallel interface 22, a modem 23 (connected to the modem back channel 17 of Fig. 1), and switch contacts 24 on the front panel of the decoder.

The decoder is additionally adapted to receive inputs from an infra-red remote control 25 via a control unit 26 and also possesses two smartcard readers 27, 28 adapted to read bank or subscription smartcards 29, 30 respectively. The subscription smartcard reader 28 engages with an inserted subscription card 30 and with a conditional access unit 29 to supply the necessary control word to a demultiplexer/descrambler 30 to enable the encrypted broadcast signal to be descrambled. The decoder also includes a conventional tuner 31 and demodulator 32 to receive and demodulate the satellite transmission before being filtered and demultiplexed by the unit 30.

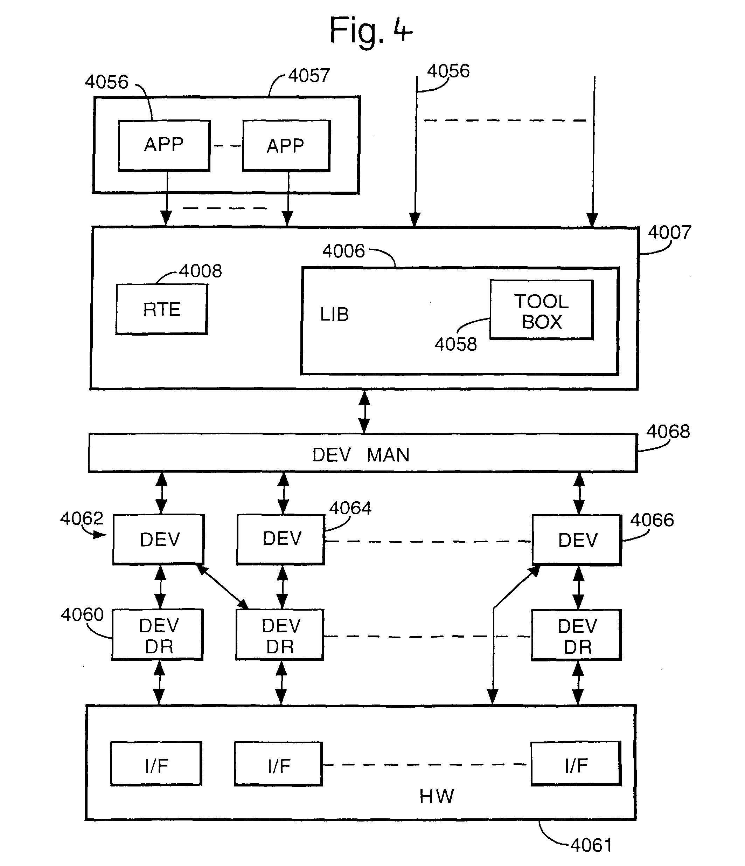

Processing of data within the decoder is generally handled by the central processor 20. Figure 4 illustrates the software architecture of the central processor 20 of the receiver/decoder. With reference to Figure 4, the software architecture comprises a Run-Time-Engine 4008, a Device Manager 4068 and a plurality of Devices 4062 and Device Drivers 4066 for running one or more applications 4056.

As used in this description, an application is a piece of computer code for controlling high level functions of preferably the receiver/decoder 13. For example, when the end user positions the focus of remote control 25 on a button object seen on the screen of the television set 14 and presses a validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 13, or broadcast and downloaded into the RAM or FLASH memory of the receiver/decoder 13.

Applications are stored in memory locations in the receiver/decoder 13 and represented as resource files. The resource files comprise graphic object description unit files, variables block unit files, instruction sequence files, application files and data files, as described in more detail in the above-mentioned patent specifications.

The receiver/decoder contains memory divided into a RAM volume, a FLASH volume and a ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

The central processor 20 can be regarded as centred on a run time engine 4008 forming part of a virtual machine 4007. This is coupled to applications on one side (the "high level" side), and, on the other side (the "low level" side), via various intermediate logical units discussed below, to the receiver/decoder hardware 4061, comprising the various ports as discussed above (that is, for example, the serial interface 21, the parallel interface 22, modem 23, and control unit 26).

With specific reference to Figure 4, various applications 4057 are coupled to the virtual machine 4007; some of the more commonly used applications may be more or less permanently resident in the system, as indicated at 4057, while others will be downloaded into the system, eg from the MPEG data stream or from other ports as required.

The virtual machine 4007 includes, in addition to the run time engine 4008, some resident library functions 4006 which include a toolbox 4058. The library contains miscellaneous functions in C language used by the engine 4008. These include data manipulation such as compression, expansion or comparison of data structures, line drawing, etc. The library 4006 also includes information about firmware in the receiver/decoder 13, such as hardware and software version numbers and available RAM space, and a function used when downloading a new device 4062. Functions can be downloaded into the library, being stored in FLASH or RAM memory.

The run time engine 4008 is coupled to a device manager 4068 which is coupled to a set of devices 4062 which are coupled to device drivers 4060 which are in turn coupled to the ports or interfaces. In broad terms, a device driver can be regarded as defining a logical interface, so that two different device drivers may be coupled to a common physical port. A device will normally be coupled to more than one device driver; if a device is coupled to a single device driver, the device will normally be designed to incorporate the full functionality required for communication, so that the need for a separate device driver is obviated. Certain devices may communicate among themselves.

As will be described below, there are 3 forms of communication from the devices 4064 up to the run time engine: by means of variables, buffers, and events which are passed to a set of event queues.

Each function of the receiver/decoder 13 is represented as a device 4062 in the software architecture of the receiver/decoder 13. Devices can be either local or remote. Local devices 4064 include smartcards, SCART connector signals, modems, serial and parallel interfaces, a MPEG video and audio player and an MPEG section and table extractor. Remote devices 4066, executed in a remote location, differ from local devices in that a port and procedure must be defined by the system authority or designer, rather than by a device and device driver provided and designed by the receiver/decoder manufacturer.

The run time engine 4008 runs under the control of a microprocessor and a common application programming interface. They are installed in every receiver/decoder 13 so that all receiver/decoders 13 are identical from the application point of view.

The engine 4008 runs applications 4056 on the receiver/decoder 13. It executes interactive applications 4056 and receives events from outside the receiver/decoder 13, displays graphics and text, calls devices for services and uses functions of the library 4006 connected to the engine 4008 for specific computation.

The run time engine 4008 is an executable code installed in each receiver/decoder 13, and includes an interpreter for interpreting and running applications. The engine 4008 is adaptable to any operating system, including a single task operating system (such as MS-DOS). The engine 4008 is based on process sequencer units (which take various events such as a key press, to carry out various actions), and contains its own scheduler to manage event queues from the different hardware interfaces. It also handles the display of graphics and text. A process sequencer unit comprises a set of action-groups. Each event causes the process sequencer unit to move from its current action-group to another action-group in dependence on the character of the event, and to execute the actions of the new action-group.

The engine 4008 comprises a code loader to load and download applications 4056 into the receiver/decoder memory. Only the necessary code is loaded into the RAM or FLASH memory, in order to ensure optimal use. The downloaded data is verified by an authentication mechanism to prevent any modification of an application 4056 or the execution of any unauthorized application. The engine 4008 further comprises a decompressor. As the application code (a form of intermediate code) is compressed for space saving and fast downloading from the MPEG stream or via a built-in receiver/decoder mode, the code must be decompressed before loading it into the RAM. The engine 4008 also comprises an interpreter to interpret the application code to update various variable values and determine status changes, and an error checker.

Before using the services of any device 4062, a program (such as an application instruction sequence) has to be declared as a "client", that is, a logical access-way to the device 4062 or the device manager 4068. The manager gives the client a client number which is referred to in all accesses to the device. A device 4062 can have several clients, the number of clients for each device 4062 being specified depending on the type of device 4062. A client is introduced to the device 4062 by a procedure "Device: Open Channel". This procedure assigns a client number to the client. A client can be taken out of the device manager 4068 client list by a procedure "Device: Close Channel".

The access to devices 4062 provided by the device manager 4068 can be either synchronous or asynchronous. For synchronous access, a procedure "Device: Call" is used. This is a means of accessing data which is immediately available or a functionality which does not involve waiting for the desired response. For asynchronous access, a procedure "Device: I/O" is used. This is a means of accessing data which involves waiting for a response, for example scanning tuner frequencies to find a multiplex or getting back a table from the MPEG stream. When the requested result is available, an event is put in the queue of the engine to signal its arrival. A further procedure "Device: Event" provides a means of managing unexpected events.

The main loop of the run time engine is coupled to a variety of process sequencer units, and when the main loop encounters an appropriate event, control is temporarily transferred to one of the process sequencer units.

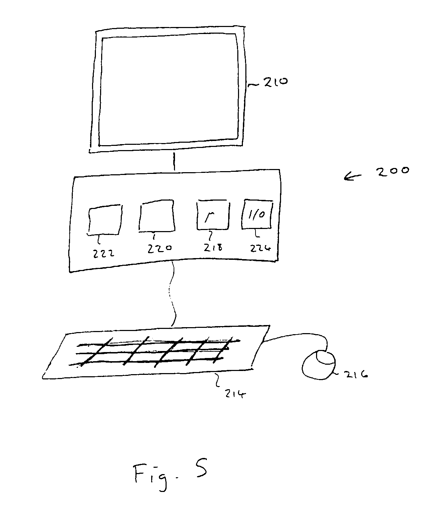

As mentioned above, authoring tool 4004 is provided to enable applications to be designed, created, tested and debugged. The authoring tool is run on a workstation (WS), such as a personal computer (PC) running Windows NT, Windows 95 or Window 98, or a UNIX machine, or a workstation running any other operating system, and is used to create and edit the resource files and data files which make up the application. Referring to Figure 5, workstation 200 comprises screen 210, computer 212, keyboard 214 and mouse 216. Computer 212 comprises a processor 218, memory 220, hard disk 222, input/output (I/O) ports 224, as well as other pieces of hardware and software that are conventional in such computers.

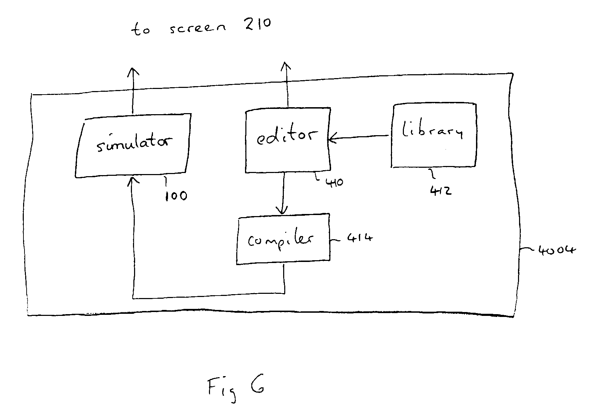

An overview of authoring tool 4004, which runs on workstation 200, is shown in Figure 6. Authoring tool 4004 comprises an editor 410 for creating and editing the various files that make up an application, library 412 which stores existing files for use by the editor 410, compiler 414 for compiling files which have been produced by editor 410 into the intermediate language which can be understood by a virtual machine, such as virtual machine 4007 in Figure 4, and a simulator 100, which is used to simulate the behaviour of a receiver/decoder in order to test and debug applications, as will be described below.

An application comprises resource files, which contain instructions written in an intermediate language designed for a virtual machine, and, optionally, data files, which contain data which is to be used by the application. An application may comprise one of more of the following types of resource files:
o module files - to define the entry points of the application
o panel files - to define the screens
o class files - to define the data structures used by the application
o script files - to define the behaviour of the application

### Examples of data files are as follows:

o icon library files - these contain a collection of 4 bits per pixel bitmaps up to a maximum size of 80 x 64 pixels. These icons can be used by the panels as buttons or as decoration.
o images - these files contain a single bitmap of any size with four bits per pixel, giving sixteen colours. This type of image is typically used as a background to a panel.
o colour tables - these are used to define the colours which a module can display on the screen.
o user data files - these files are defined by the user for use by the application. They are ASCII text files or binary data files.

In use, an application developer makes use of existing files which are stored in the library 412, to produce files which are customised for his application, using the editor 410. Files which are being edited are displayed on the workstation screen 210 and changes are entered using keyboard 214 and mouse 216. The files may be displayed in various ways; for example graphic files may be displayed as graphics on the screen, whereas for resource files, the code in the files may be displayed, or a representation of the overall structure or architecture of the code may be displayed.

Once an application has been created, it is converted into the intermediate language which can be understood by a virtual machine by compiler 414.

In order to test the application, the workstation is provided with simulator 100, which simulates the behaviour of a receiver/decoder, so that the application can be tested on the workstation 200 without being downloaded to a real receiver/decoder. This enables an application to be tested immediately, and avoids the need to provide a receiver/decoder and associated hardware.

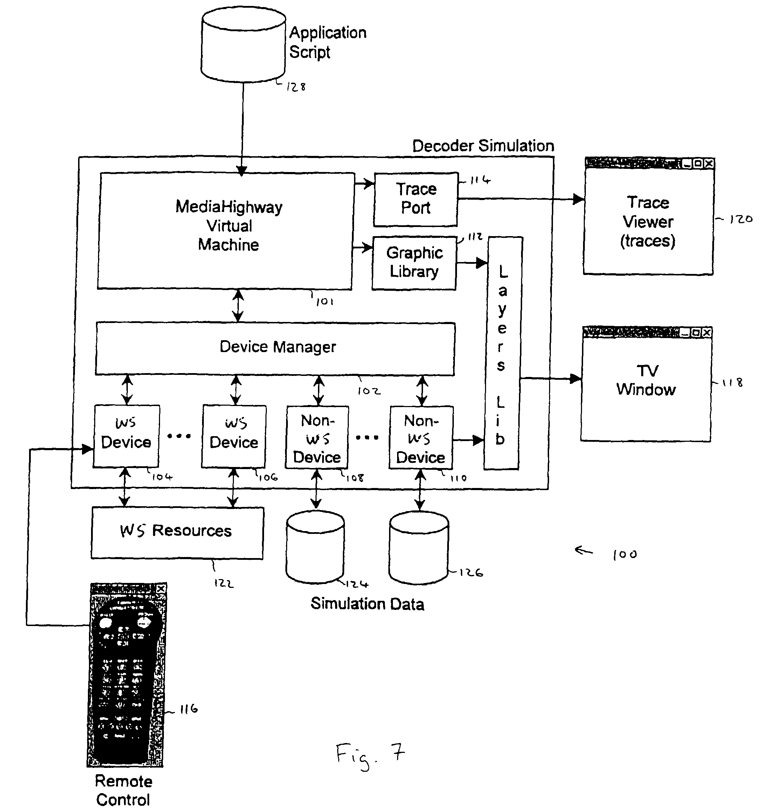

Referring to Figure 7, the main modules of the simulator 100 are simulated virtual machine 101, simulated device manager 102, simulated WS device modules 104, 106, simulated non-WS device modules 108, 110, simulated graphic library 112, simulated trace port 114 (which is used to output trace messages, which may be used, for example, for debugging), simulated remote control module 116 (which emulates a remote control unit on the workstation screen), simulated TV window 118 (which emulates a television by displaying images on the workstation screen), simulated trace viewer 120 (which displays trace messages, also on the workstation screen), WS resources 122 (which are pieces of hardware belonging to the workstation which are also found in a digital decoder), and simulation files 124, 126 (which contain data which simulates the behaviour of hardware not found on the workstation). Application script 128 is the application code which it is desired to test.

The simulated virtual machine 101 loads and runs the application code 128. It converts the instructions of the application code, which are in an intermediate language, into native instructions that can be understood by the simulated device manager 102.

The simulated device manager 102 ensures a uniform mode of access to different peripherals for application 128. It provides the means for the application to transmit and to receive data synchronously and asynchronously to and from the various simulated peripherals. The device manager 102 is implemented in the form of a library which is provided to the virtual machine 101. It consists of an interface module, a memory control module, and a system module which allows inter-process communication for sending commands and data to devices, and for synchronously receiving data sent by a device.

The device modules 104 - 110 simulate the behaviour of devices in a receiver/decoder. In the case of WS device modules 104, 106, the hardware that is managed by the device exists in both real receiver/decoders and in the workstation 200. Examples of such devices are clock, serial port, parallel port, modem, etc. Since the hardware is present on the workstation, the actual workstation hardware can be used, rather than simulating the behaviour of a piece of hardware. Devices that do not access any hardware also fall into this category. Non-WS devices 108, 110 simulate devices that manage pieces of hardware that do not exist on the workstation. Examples of such devices are tuner, demux, smart card reader, flash memory, etc. Since the corresponding hardware does not exist on the workstation, the behaviour of the hardware also has to be simulated. The way in which the simulation is implemented depends on the behaviour of the device; in general it is implemented using data stored in specific files, such as simulation files 124, 126.

A specific example of a simulator will now be described with reference to a UNIX workstation, although it will be appreciated that other types of environments such as Windows NT, Windows 95, Windows 98, Windows 2000, Solaris, LINUX, BeOS, NextStep etc. could be used.

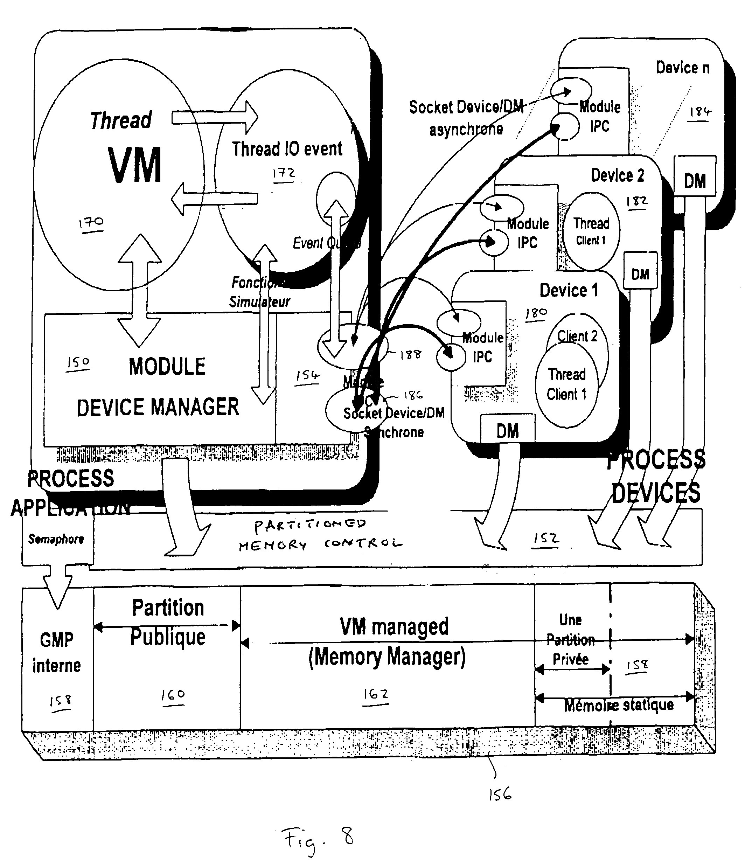

Referring to Figure 8, the simulated device manager 102 comprises device manager module 150 which provides the interface with the simulated virtual machine in the form of a library, memory control module 152 which controls dynamic memory resources, and inter-process communication (IPC) module 154 for the transmission of commands and data to devices and the synchronous reception of data emitted by a device. The localisation of memory space necessary for these exchanges of data is provided by partitioned memory 156, which is configured into specific zones by the simulated device manager 102. A part of the memory may be configured by the device manager 102 for dynamic allocation and release of memory space.

The role of the partitioned memory 156 is to represent the real memory space of a digital decoder as well as to allow the exchange of information between processes in the UNIX environment. The memory is divided into four main areas:
o the GMP (partitioned memory control) area 158 which is used by the device manager for the control of the memory
o the public area 160 which is generated by the simulator
o the virtual machine managed area 162 which is generated dynamically, independently of the device manager
o the static area 158, also generated by the virtual machine, in which private partitions are allocated.

The separation of the memory into buffers, and the allocation, release and locking of buffers is under the control of the simulator.

Referring to Figure 8, a main thread is created which runs the VM thread 170, the device manager module 150, the memory control module 152 and the inter-process communication module 154. Dialogue with the simulated devices 180, 182,184 takes place via UNIX sockets 186 and 188 in non-connected mode. As noted above, the synchronous exchange of data with devices takes place through the use of a "Device: Call" procedure, while asynchronous exchanges takes place through the use of a "Device: I/O" procedure. When a "Device: Call" or "Device: I/O" procedure is called, the virtual machine 101 transmits to the simulated device manager 102 the address of the data buffer allocated in the partitioned memory 156 for the exchange of data. The device manager 102 takes control of the address; if it is outside of the partitioned memory, the device manager allocates a space in the partitioned memory and copies the necessary data into this space. The device manager then puts a command message into an event queue for passing to the appropriate simulated device.

Simulated devices 180, 182, 184 run in processes which are completely independent of that the of simulated virtual machine 100. A device process is started on the first opening of the device, and is destroyed on the closing of the last client. The virtual machine transmits data to a device either by using the device's private memory space, or via the partitioned memory. A device can transmit data to the virtual machine only via memory allocated by the device manager. All of the command messages which are received, or the response of the device thereto, as well as asynchronous events, use two sockets. Socket 186 is dedicated to synchronous communications with the virtual machine, while socket 188 is dedicated to the asynchronous responses of the device.

Simulated devices 180, 182, 184 consist of libraries of procedures which allow the devices to be considered as a group of commands, each associated with a procedure. The devices decode received command messages and call the associated procedure. The procedures either access hardware in the workstation which is equivalent to hardware in a real DSTB, or else simulation files which contain data which simulate the operation of a real DSTB. A response from the hardware, or the data in a simulation file, is then passed back to the virtual machine via the partitioned memory.

To obtain a simulation of the asynchronous reception of events originating from a device, an asynchronous reception thread (Thread IO) 172 is created in the main thread. The role of this thread is to receive events and data which have been sent by the various simulated devices in response to a command. Received events are kept in a list in the order of their arrival, then sent to the virtual machine 101 under the control of procedures provided by the virtual machine.

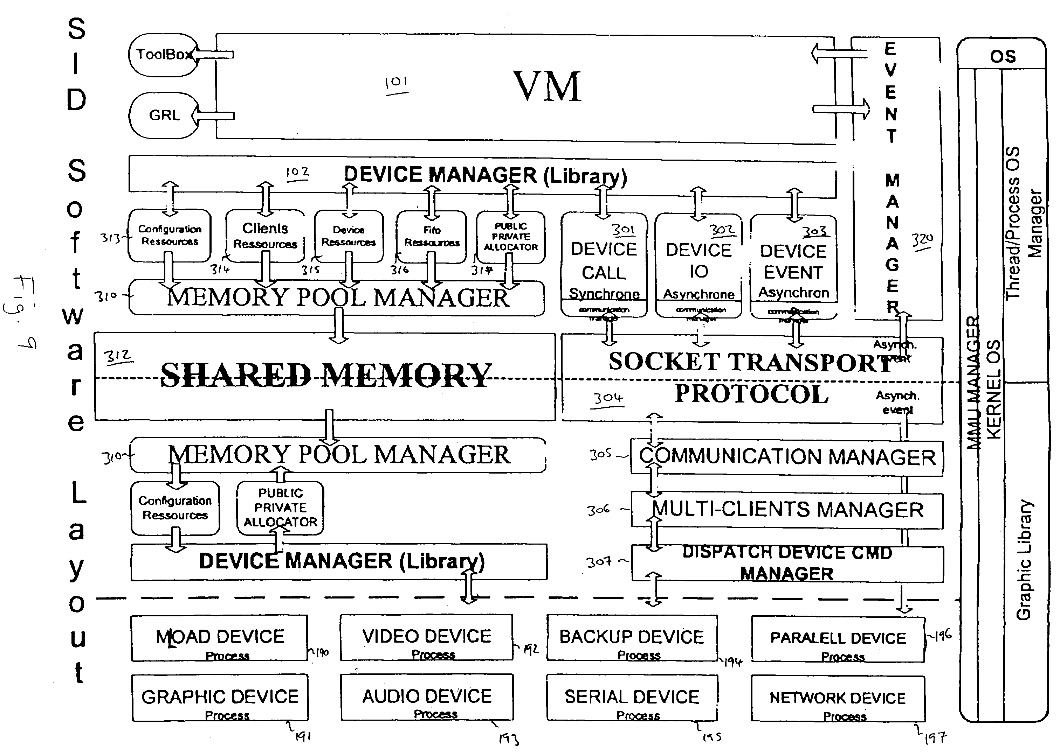

Figure 9 illustrates schematically the software layout of the simulator. Virtual machine 101 interacts with device manager 102. The transfer of commands from the device manager 102 to the various devices 190 - 197 takes place via the procedures "device call" 301, "device I/O" 302 and "device event" 303, socket transport protocol 304, communication manager 305, multi-clients manager 306 and dispatch device command manager 307. Memory pool manager 310 manages the shared memory 312 and allocates space in the shared memory for configuration resources 313, client resources 314, device resources 315, FIFO (first in first out memory) resources 316 and public/private allocator 317. As described above, the shared memory allows data to be transferred between the main thread and the devices. Event manager 320 handles asynchronous events originating from the devices 190 - 197.

In another preferred embodiment, the device simulator operates in a Windows NT environment. In this embodiment, devices are implemented as dynamic link libraries, rather than as separate programs as in the UNIX embodiment described above. In the NT environment, there is no IPC module. In both implementations a command manager is in charge of the transmission of events from the application to the simulated devices, and an event manager is responsible for the transmission of events from the simulated devices to the application.

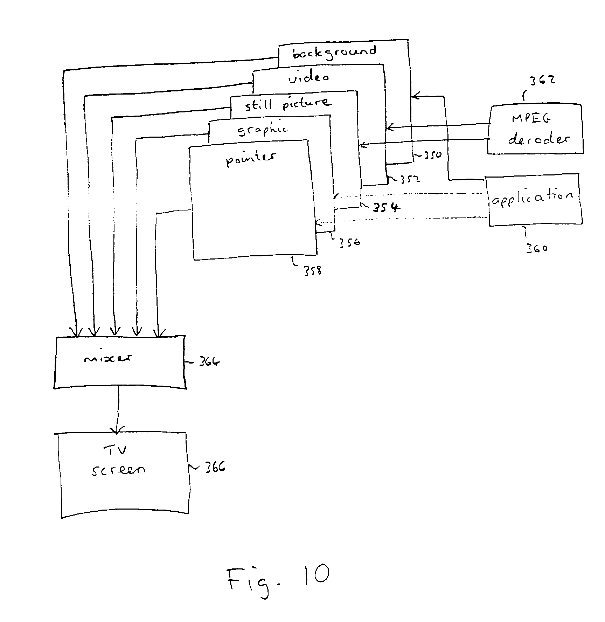

In order to illustrate the operation of the simulator 100, an example is shown in Figure 10 of how an image for display on a television screen might be produced in a real DSTB. The image is divided into five layers: background layer 350, video layer 352, still picture layer 354, graphic layer 356, and pointer layer 358. The pointer layer is superimposed on the graphic layer, which is superimposed on the still picture layer, and so forth. In order to allow the viewer to see a mix of all layers, rather than just the top layer, a transparency factor is assigned to each layer. The layer is opaque when the transparency factor is 0, and transparent when the transparency factor is 1. In most cases, a transparency factor is assigned to each pixel in the layer; exceptions are the background layer (since there is no layer behind it) the video layer, for which the transparency factor is global to the region where the video is played (the rest of the layer being transparent), and the pointer layer for which the pointer is opaque and the rest of the layer is transparent.

The pointer, graphics and background layers are produced by application 360, whereas the video and still picture layers come from the transmitted digital signal via MPEG decoder 362. The various layers are mixed in a mixer 364, which is part of graphic processor 36 in Figure 3. The mixer consists of hardware chips which carry out the mixing of the five layers. At any time, the application can change the transparency factor for each layer (when allowed). In order to do this, for the video layer, the application invokes a VIDEO device command, for the still picture layer, the application invokes a PICTURE device command, and for the graphics layer the application calls a GRAPHIC library function. The mixed image is displayed on the user's television set 366.

In order to simulate the situation shown in Figure 10, the various devices and associated hardware with which the application interacts are replaced with software simulations on the workstation. Thus,. Similarly, a software mixer is provided which mixes the various image layers. The thus mixed image is then displayed on the screen of the workstation, rather than a separate television screen. In this way, the application designer can test the operation of his application without downloading the application to a DSTB.

In the simulator 100, the mixing function described above is implemented using a low-level library called the LAYERS library. To simulate the mixing of the various layers, rather than writing directly to the screen, each module calls a LAYERS library. Each module that modifies the screen content computes the position, size, content and transparency factor of the region to change, and provides this information to the LAYERS library. The LAYERS library manages four memory blocks for the background, video, still picture and graphic layers respectively. Each time a region in a layer is modified, the LAYERS library computes the resulting screen region taking into account the content of the other layers and their transparency factors. When displaying video sequences, this work is repeated for each new image (the number of images per second depending on the files to play). The algorithms used to mix layer regions are thus optimized as far as possible in order to obtain fluent video playing.

Each layer is managed by means of a pixel map, in which each pixel is assigned a set of values. In one example, for the still picture and graphics layers each pixel is assigned 32 bits: 8 bits for each of the colours red, green and blue, 6 bits for the transparency level, and 2 reserved bits, while for the background layer 24 bits are used. Depending on the TV standard that is to be simulated, this gives 720x576x4 = 1,658,880 bytes for the PAL standard and 720x480x4 = 1,382,400 bytes for the NTSC standard.

Since the pointer layer is the top layer and no transparency factor is applied to the pointer, there is no need to apply any mixing to the pointer layer. The pointer shape can be managed by the system standard mechanisms.

In the simulator, rather than using a real MPEG decoder, files are provided which contain data typical of the output of a real MPEG decoder. These files may be produced either by storing data which has come from a real MPEG decoder, or by use of simulation files. Simulation files are files which have been generated to have certain characteristics, such as subtitles.

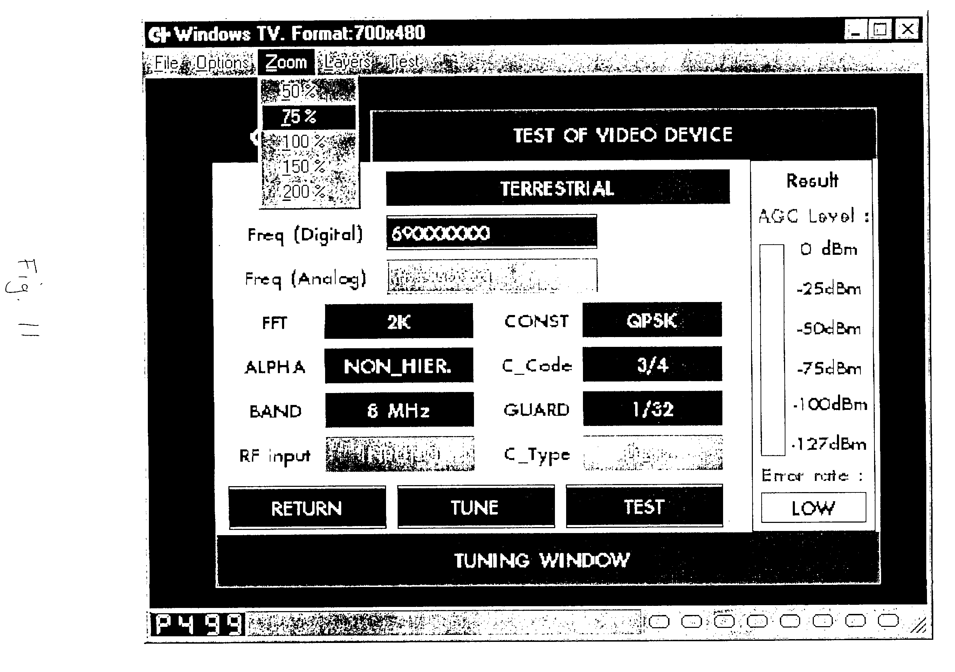

Figure 11 shows an example of how an application which is being run on a simulated receiver/decoder appears on the workstation screen. In the example shown, the application is running a test of the video device. A TV window on the workstation screen is used to display the output of the application in the same way that it would appear on a real television screen. In Figure 11, the TV window is scaled to 0.75% of the total workstation screen.

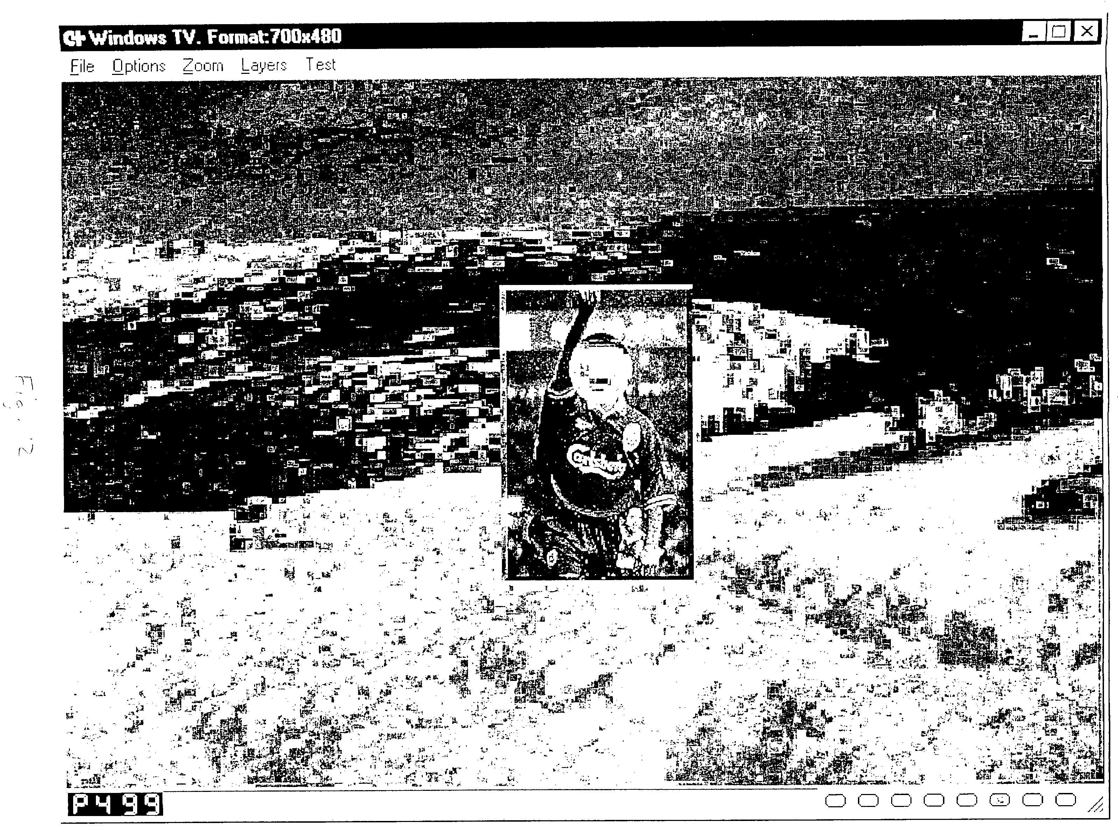

Another example of an application being run on a simulator is shown in Figure 12. This example shows a video layer, with a graphic layer, comprising an image of a soccer player, superimposed on the video layer. The graphic layer has a number of transparent pixels, so that the video layer is seen through the soccer player's head.

Further examples are now given of implementations of simulations of particular devices on Windows NT and UNIX workstations.

### WS Devices

### SERIAL

The SERIAL device allows the application to communicate with any kind of equipment via a serial link (using the RS232 standard, for example). This device is simulated using the standard APIs of UNIX / NT systems. It allows communication through the serial port of the workstation.

### PARALLEL

The PARALLEL device allows the application to communicate via a parallel link (using the IEEE1284 standard, for example). This device is simulated using the standard API of UNIX / NT systems. It allows communication through the parallel port of the workstation.

### BUS_1394

This device allows the application to communicate with any kind of equipment via the High Performance Serial Bus using the IEC 1883 standard. This device is simulated using an extension board which provides access to the 1394 bus.

### UNIMODEM

This device allows the application to control an internal or external modem (using the HAYES standard, for example). This device is implemented using the standard APIs of UNIX/NT systems. It allows control of an external modem through an actual serial port of the workstation or an internal modem through a virtual serial port (if allowed by the system).

### NETWORK

This Device allows the Application to configure and to use a Network stack. Several protocols are supported: TCP, UDP, IP, PPP, etcetera. Once the stack is configured, the Device provides to the Application a BSD-like socket interface to allow it to open TCP connections, to send and receive UDP datagrams, to join multicast groups, and so forth.

The Device can be divided into two parts: the configuration part and the communication part. The configuration part cannot be implemented in UNIX/NT systems since configuration can only take place at system boot time. Thus, this part is only a simulation. Currently, NETWORK Device responses to configuration commands are hard coded, but they maybe coded in a "configuration" file later. The communication part is implemented using the standard of APIs of UNIX/NT systems. It allows communication with other equipment using BSD sockets.

### CLOCK

This Device allows the Application to access a real time clock. The application can get and set date and time information and program wakeup alarms. This Device is implemented using the standard APIs of UNIX/NT systems.

### KEYBOARD

This Device allows the Application to configure the KEYBOARD device (if available) and to receive keyboard and Remote Control events. This Device is implemented using the standard APIs of UNIX/NT systems. The Remote Control device is simulated using the Remote Control software module, that sends system messages to the KEYBOARD Device. Although they may not communicate in the same way (infrared rays for set top box and cable for workstations), the KEYBOARD devices of decoders and workstations are similar.

### POINTER

This Device allows the Application to configure the pointer (mouse) device (if available) and to receive pointer events (mouse move, button click, etcetera). The Device is implemented using the standard APIs of X-Windows/Windows systems. The POINTER Device defines regions in the screen where pointer can take different shapes. These regions belong to the Pointer Screen Layer.

### GRAPHIC

This device allows the Application to decompress images that come from different formats, such as JPEG, MPEG, GIF and PNG. The application provides compressed images in a set of memory buffers and the device returns decompressed images in another set of buffers. The images may be fixed or animated. Image buffers come, in general, from DVB sections loaded thanks to the MLOAD Device. This Device accesses no piece of hardware. It needs no system APIs.

To display images that are decompressed with this Device, the Application uses the GRAPHIC Library functions. This Library modifies only the content of the Graphic Screen Layer.

### Non-WS Devices

### PICTURE

This Device provides the same decompression services as the GRAPHIC Device. However, to display images that are decompressed with this Device, the Application uses the PICTURE Device itself. The Device modifies the content of the Background and the MPEG Screen Layers.

### AUDIO

This Device allows the Application to program the Audio chip of the set top box. The Device is able to play an audio stream and to change the Audio parameters (prologic, stereo, etcetera). The Device is implemented using the standard APIs of UNIX/Windows systems. Changing the system audio parameters is only available when allowed by the target system.

### VIDEO

This Device allows the Application to program the MPEG decompression chip. The Device is able to change the Video Image position, size, zooming, etcetera. Since the MPEG chip is software simulated in the UNIX/NT workstation by the SERVICE Device, the only job of the VIDEO Device is to inform the SERVICE Device about the new Video image parameters.

### SERVICE

This Device allows the Application to select a given DVB service (for example, TV channel) by specifying its PIDs (program identifications), for example, video, audio, subtitle or teletex PID. The Device then directs each PID data flow to the right hardware chip in order to be processed (decompressed) and played.

The SERVICE Device is simulated in UNIX/NT workstations as follows. When a service is selected, the Device ignores all service PIDs excepting the Video PID. It uses this latter PID as an entry in a pre-configured table where disk file names are stored. Those files contains data from a given multimedia format. The service either reads and plays these data by itself, or uses system standard APIs to do the job. The SERVICE Device uses information provided by the VIDEO Device to determine size, position and zooming parameter for the displayed images.

This Device modifies the content of the Video Screen Layer. Video images (content, position, and size) are computed one by one and each resulting image is displayed in the Video Screen Layer.

### DISPLAY

This Device allows the Application to use the displays in front of the terminal. The Application can request the display of the current time or any private message. This Device simulation, in UNIX/NT systems, uses the status bar of the TV Window to display the requested messages.

### SCTV, SCVCR, SCAUX

These Devices allow the Application to check and configure the SCART outlet of the TV set, the VCR and the auxiliary equipment respectively. Responses to SCTV, SCVCR and SCAUX commands may be hard coded, or they may be coded in a "configuration" file.

### POWER

This Device is used to put the set top box in standby mode and to retrieve information about power-on. The Device simulation allows the Application to stop all Devices and to exit from the UNIX/Windows process.

### BACKUP

This Device allows the Application to read and write into an EEPROM and a Flash memory. These hardware devices are used to store information in a non-volatile memory.

EEPROM and Flash memory are simulated, in UNIX/Windows systems, using blocks of RAM (volatile) memory mapped to disk files. This provides to the Application a stable memory that simulates EEPROM and Flash. In case of power failure, the Application can retrieve data stored in the disk files as if they were stored in stable memory.

### MLOAD

This Device is used to download DVB sections from a transmitted data stream. The Application provides the PID (Program ID) that contains the sections to load, and filters to reduce the loaded sections number to only the sections of interest to the application.

In the Simulation environment, a disk file is assigned to each PID in a pre-configured table. When the Application starts section loading from a given PID, the Device opens the associated disk file and reads it cyclically. Each time a section is loaded from the file, the Device applies filtering criteria to it. If the section passes the filters, it is transmitted to the Application.

From the Application point of view, the Device behaviour is the same as if sections were loaded from the broadcasted bitstream.

### TUNER

The TUNER Device is used to request information about the set top box tuner, to read the tuner status (AGC, BER, etc) and to set and get the tuning parameters. This Device also allows frequency-scanning operations.

In the simulation environment, this Device takes its data from a file that describes a virtual antenna. Each frequency that could be detected with the virtual antenna is registered in the file with its characteristics (rate symbol, convolutive code, AGC, BER, etcetera).

For each frequency, the directory for simulation files of MLOAD Device (PID data) is also registered. Thus, if the Application tunes to a different frequency, the set of loadable PIDs changes as in the actual case.

### RCARD

This Device is used to communicate with the right smart card reader (if available). This device is in general used for bankcards. For security reasons and since bankcard code and data is protected, this Device is not simulated.

### LCARD

This Device is used to communicate with the left smart card reader. This Device is used for the Conditional Access system smart card. For security reasons and since CA card code and data is protected, this Device is not simulated.

### CA (Conditional Access)

This Device allows the Application to get information about the Conditional Access system and to control it. For security reasons and since CA mechanisms are protected, this Device is not simulated.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. Apparatus for testing an application for a receiver/decoder, comprising means for simulating a function of the receiver/decoder.

2. Apparatus according to claim 1 wherein the apparatus is adapted to run the application.

3. Apparatus according to claim 1 or 2 wherein the apparatus is adapted to run the application in a first process, and to simulate a function of the receiver/decoder in a second process.

4. Apparatus according to claim 3 wherein the first and second processes are independent of each other.

5. Apparatus according to claim 3 or 4 wherein the first and second processes are run on the same processor.

6. Apparatus according to any of claims 3 to 5 further comprising a partitioned memory for enabling the passing of data between the first process and the second process.

7. Apparatus according to any of the preceding claims wherein a function of the receiver/decoder is at least partly simulated in software.

8. Apparatus according to any of the preceding claims wherein a function of the receiver/decoder is simulated using hardware which corresponds to hardware in a receiver/decoder.

9. Apparatus according to any of the preceding claims, comprising storage means for storing a file containing data which represents data produced by a piece of hardware in a receiver/decoder.

10. Apparatus according to any of the preceding claims wherein the apparatus is adapted to produce an output, for display on a screen, which simulates an output of a receiver/decoder.

11. Apparatus according to any of the preceding claims wherein the apparatus is adapted to receive as an input data representing data that would be received by a receiver/decoder.

12. Apparatus according to any of the preceding claims wherein the apparatus is adapted to produce an output for display on a screen which represents a piece of hardware with which a receiver/decoder may interact.

13. Apparatus for editing and testing an application, comprising an editor for editing the application and apparatus for testing the application according to any of the preceding claims.

14. Apparatus according to claim 13, wherein the editor is adapted to produce an output for display on a screen, and the means for simulating a function of the receiver/decoder is adapted to produce an output for display on the same screen.

15. Apparatus according to claim 13 or 14 comprising a processor for running both the editor and the means for simulating a function of the receiver/decoder.

16. Apparatus according to any of claims 13 to 15 wherein the means for simulating a function of a receiver/decoder is adapted to run an application which has been edited by the editor.

17. Apparatus according to any of the preceding claims wherein the function of the receiver/decoder is at least one of receiving and processing input data, for example from a remote control, a keyboard or a communication device such as a modem, decoding video data, producing a video output, tuning into a broadcast signal, communicating with a smartcard, and preferably a function of at least one of the following devices: REMOTE CONTROL, SERIAL, PARALLEL, BUS 1394, MODEM, NETWORK STACK, CLOCK, KEYBOARD, POINTER, GRAPHIC, PICTURE, AUDIO, VIDEO, SERVICE, DISPLAY, SCTV, SCVCR, SCAUX, POWER, BACKUP, MLOAD, TUNER, and SMARTCARD.

18. A workstation comprising an editor for editing applications, a simulator for simulating a function of a receiver/decoder, and a display for displaying an output of the editor and an output of the simulator.

19. A workstation according to claim 18 wherein the simulator is adapted to run an application which has been edited by the editor.

20. A workstation according to claim 18 or 19 wherein the output of the simulator is displayed in a window of the display.

21. A workstation according to any of claims 18 to 20 wherein an input device for inputting data to the application is simulated in a window of the display.

22. A method of testing an application for a receiver/decoder, comprising simulating a function of the receiver/decoder.

23. A method of editing and testing applications comprising editing applications and further comprising the method of testing applications according to claim 22.

24. A computer readable medium having stored thereon a program for carrying out the method of claim 22 or 23.

25. A computer program product comprising a program for carrying out the method of claims 22 or 23.
